# EUROPÄISCHE PATENTSCHRIFT

(11) **EP 1 331 113 B1**
(45) Veröffentlichungstag und Bekanntmachung des Hinweises auf die Patenterteilung: **18.01.2006**
(21) Anmeldenummer: 02025967.7
(22) Anmeldetag: 21.11.2002
(51) Int. Cl.: B60H 1/32

(54) **Einrichtung zum Kühlen und/oder Heizen eines Raumes, mit einem Adsorptionskühlkreis**
System for cooling and/or heating a space, with one adsorption refrigeration cycle
Système de réfrigération et/ou de chauffage d'un espace, avec cycle de réfrigération par adsorption

(30) Priorität: 26.01.2002 DE 10202979
(43) Veröffentlichungstag der Anmeldung: 30.07.2003
(73) Patentinhaber: J. Eberspächer GmbH & Co. KG, 73730 Esslingen (DE)
(72) Erfinder: Bauer, Thomas, 72555 Metzingen (DE)

(56) Entgegenhaltungen:
- WO-A-98/34807
- DE-A- 2 756 348
- DE-A- 19 823 621
- DE-A- 19 900 965
- US-A- 1 985 636
- US-A- 4 523 631

## Beschreibung

Die Erfindung betrifft eine Einrichtung zum Kühlen und/oder Heizen eines Raumes, insbesondere eines Fahrgastraumes eines Kraftfahrzeugs.

Die US 1 985 636, US 2 783 622, US 5 383 341 und die US 3 661 200 zeigen jeweils Adsorptionskühlkreise zum Kühlen eines Fahrzeuginnenraums, deren Sorber wärmeübertragend mit einem Abgasstrang einer Verbrennungsmaschine des Fahrzeugs verbunden ist. Des weiteren besitzt ein solcher Adsorberkühlkreis einen Kühlungswärmetauscher, der dem zu kühlenden Raum ausgesetzt ist. Außerdem enthält der Adsorberkühlkreis einen Kondensator sowie einen Verdampfer. Bei der US 1 985 636 wird außerdem ein Motorkühlkreis zum Kühlen und zum Heizen der Verbrennungsmaschine gezeigt, der einen mit dem Abgasstrang wärmeübertragend gekoppelten Abgaswärmetauscher aufweist. Die US 3 661 200 zeigt ebenfalls einen Motorkühlkreis zum Kühlen der Verbrennungsmaschine, dessen Wärmeübertragungsmedium zum Temperieren des Fahrzeuginnenraums stromauf des dem Fahrzeuginnenraum zugeordneten Kühlungswärmetauschers bedarfsabhängig in den Adsorberkühlkreis eingemischt werden kann.

Aus der US 4 523 631 ist ein Adsorberkühlkreis zum Kühlen eines Fahrzeuginnenraums bekannt, dessen Sorber wärmeübertragend mit einem Motorkühlkreis gekoppelt ist, der in üblicher Weise zur Kühlung der Verbrennungsmaschine dient. Der Motorkühlkreis wird hier zum Erwärmen des Sorbers beim Desorbieren verwendet.

Aus der US 4 538 424 ist es bekannt, bei einem Adsorberkühlkreis den Sorber mit Hilfe einer elektrischen Heizung und/oder mit Hilfe eines Schmierölkreises einer Verbrennungsmaschine für den Desorbierbetrieb zu beheizen.

Aus der DE 41 25 993 C2 ist eine Einrichtung zum Kühlen und/oder Heizen einer Kabine, z.B. eines Fahrgastraums eines Kraftfahrzeugs, bekannt, umfassend einen an die Kabine angeschlossenen Zuluftkanal und einen an die Kabine angeschlossenen Abluftkanal sowie eine Wärmequelle, deren Wärmeenergie auf einen Luftstrom übertragbar ist. Hierbei ist die Wärmequelle durch einen Sorptionsreaktor mit einem Sorbens wie Zeolith oder dergleichen gebildet, dessen Reaktionskammer vom Luftstrom durchströmt ist und dabei der Luft Feuchtigkeit entzieht und die Adsorptionswärme an den Luftstrom abgibt. Der Sorptionsreaktor wird bei der bekannten Einrichtung somit zum Erwärmen eines Luftstroms verwendet, mit dem der Fahrgastraum beheizbar ist. Zur Kühlung des Fahrgastraums wird der vom Sorptionsreaktor erwärmte Luftstrom über mehrere Wärmetauscher gekühlt sowie in einem Verdampfer gekühlt und anschließend in den Fahrgastraum eingeleitet.

Aus der DE 198 23 621 A1 ist eine Klimaanlage für ein mit einem Kolbenmotoren angetriebenes Fahrzeug bekannt, die hauptsächlich mit der Hochtemperaturwärme des Abgases angetrieben ist. Hierfür wird eine Adsorptionswärmepumpe benutzt, bei der Adsorber/Desorber und Kondensator/Verdampfer in einem Behälter untergebracht sind und ohne geregelte Ventile und Rückschlagklappen auskommen.

Aus der DE 30 19 786 C2, DE 39 18 597 C2 und DE 39 18 593 A1 sind Wärmespeicher für Kraftfahrzeuge bekannt, die mit Hilfe der Verbrennungsabgase einer Verbrennungsmaschine des Fahrzeugs beheizt bzw. aufgeladen werden.

Aus der EP 1 080 957 A1 ist ein Eisspeicherelement für eine Standklimaanlage eines Kraftfahrzeugs bekannt, das als Kältespeicher verwendbar ist.

Die vorliegende Erfindung beschäftigt sich mit dem Problem, für eine Einrichtung der eingangs genannten Art eine verbesserte Ausführungsform anzugeben, mit der insbesondere ein höherer Nutzungsgrad für die Abgasabwärme erzielbar ist.

Dieses Problem wird durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einer mit einer Abgasanlage ausgestatteten Verbrennungsmaschine einen in sich geschlossenen Motorkühlkreis mit einem davon fluidisch unabhängigen, ebenfalls in sich geschlossenen Adsorptionskühlkreis zu kombinieren, wobei ein Abgaswärmetauscher des Motorkühlkreises und ein Sorber des Adsorptionskühlkreises in einem Abgasstrang der Abgasanlage angeordnet sind. Da der Motorkühlkreis zusätzlich zu seiner Hauptfunktion, nämlich Kühlen und Zuheizen der Verbrennungsmaschine, außerdem zum Heizen des Raums, insbesondere des Fahrgastraums, ausgebildet ist, verfügt der Motorkühlkreis über einen dem Raum ausgesetzten Heizungswärmetauscher. Hierdurch ist es möglich, zum Beheizen des Raumes zusätzliche Wärmeenergie aus dem Abgas zu entnehmen, beispielsweise dann, wenn die Verbrennungsmaschine noch kalt ist bzw. zu wenig Wärme erzeugt. Gleichzeitig kann die Wärmenutzung des Abgases durch die Aufwärmphase der Verbrennungsmaschine verkürzt werden. Insbesondere bei modernen Dieselmotoren kann die Aufwärmphase relativ lange dauern, wenn der Dieselmotor ausschließlich durch die Verbrennungsvorgänge erwärmt werden soll. Des weiteren kann mit Hilfe des Adsorptionskühlkreises der Raum gekühlt werden, wobei die zum Desorbieren des Sorbers benötigte Wärmeenergie dem Abgas entnommen wird. Insgesamt ergibt sich dadurch eine größere Bandbreite für die Nutzung der in den Abgasen enthaltenen Wärmeenergie.

Von besonderem Vorteil ist eine Ausführungsform, bei der der Verdampfer als Kältespeicher ausgebildet ist und bei der der Motorkühlkreis wärmeübertragend mit diesem Kältespeicher verbunden ist. Durch diese Merkmalskombination ist es möglich, ein und denselben Speicher innerhalb des Adsorptionskühlkreises als Kältespeicher und alternativ dazu für den Motorkühlkreis als Wärmespeicher zu verwenden. Dies widerspricht sich nicht, da der Wärmespeicher regelmäßig nur dann benötigt wird, wenn kein Kältespeicher benötigt wird und umgekehrt. Mit anderen Worten, bei der Verwendung des Speichers als Kältespeicher ist eine Wärmeabgabe aus dem Wärmespeicher nicht erforderlich, wofür er mit entsprechenden Ventilmitteln aus dem Motorkühlkreis ausgekoppelt werden kann. Ebenso ist bei der Verwendung des Speichers als Wärmespeicher eine Kühlung des Raums nicht erforderlich, so daß der Adsorptionskühlkreis deaktiviert ist. Durch diese Ausführungsform ergibt sich ein Synergieeffekt, da für beide Kühlkreise nur ein einziger Speicher für Kälte bzw. Wärme erforderlich ist. Vorteilhaft können dadurch Herstellungskosten und Bauraum sowie Gewicht eingespart werden.

Entsprechend einer weiteren vorteilhaften Ausführungsform können der Abgaswärmetauscher des Motorkühlkreises und der wenigstens eine Sorber des Adsorberkühlkreises zu einer Wärmetauscher-Sorber-Einheit zusammengefaßt sein. Durch diese Bauweise wird für die beiden Kühlkreise ein weiteres gemeinsames Bauteil bereitgestellt, wodurch Raumbedarf, Gewicht und Kosten für die erfindungsgemäße Einrichtung reduziert werden können. Des weiteren vereinfacht sich deren Zusammenbau. Eine derartige Wärmetauscher-Sorber-Einheit bildet eine hochintegrierte Baugruppe, die besonders kompakt ausgebildet werden kann. Zweckmäßig ist diese Wärmetauscher-Sorber-Einheit in einen Endschalldämpfer des Abgasstrangs integriert, wodurch die Einheit eine weitere Funktion, nämlich Schalldämpfungswirkung, erhält.

Von Interesse ist außerdem eine Ausführungsform, bei der der Motorkühlkreis eine Zuheizeinrichtung aufweist. Mit Hilfe einer derartigen Zuheizeinrichtung, die beispielsweise als elektrische Heizung oder als motorunabhängige, brennstoffbetriebene Heizung ausgebildet sein kann, läßt sich für den Motorkühlkreis ein Standbetrieb, also ein Betrieb bei stillstehender Verbrennungsmaschine, realisieren. Dadurch ist es möglich, die Verbrennungsmaschine vor ihrem Start vorzuwärmen. Gleichzeitig ist es dadurch möglich, den Raum vor dem Start der Verbrennungsmaschine zu beheizen.

Sofern der Motorkühlkreis wärmeübertragend mit dem Sorber des Adsorptionskühlkreises gekoppelt ist, kann mit Hilfe dieser Zuheizeinrichtung außerdem unabhängig vom Betrieb der Verbrennungsmaschine der Adsorberkühlkreis zum Kühlen des Raums verwendet werden, wenn durch Betätigen der Zuheizeinrichtung über den Motorkühlkreis der Sorber zum Desorbieren erwärmt wird. Die wärmeübertragende Kopplung zwischen Motorkühlkreis und Sorber kann beispielsweise über die gemeinsame Wärmetauscher-Sorber-Einheit erfolgen.

Bei einer bevorzugten Ausführungsform kann die Zuheizeinrichtung einen Brenner aufweisen, der stromauf des Abgaswärmetauschers und des wenigstens einen Sorbers bzw. stromauf der Wärmetauscher-Sorber-Einheit im Abgasstrang angeordnet ist. Die Zuheizeinrichtung dient somit zur Erzeugung heißer Verbrennungsabgase, die einerseits vom Motorkühlkreis über den Abgaswärmetauscher und andererseits für den Adsorptionkühlkreis zum Beheizen des wenigstens einen Sorbers beim Desorbierbetrieb nutzbar sind.

Mit Hilfe dieser Zuheizeinrichtung kann somit besonders einfach ein Standbetrieb für den Motorkühlkreis sowie ein Standbetrieb für den Adsorberkühlkreis realisiert werden. Darüber hinaus kann mit Hilfe der Zuheizeinrichtung bedarfsabhängig beim Betrieb der Verbrennungsmaschine deren Abgaswärme erhöht werden, beispielsweise um das Warmlaufen der Verbrennungsmaschine zu verkürzen.

Weitere wichtige Merkmale und Vorteile der Erfindung ergeben sich aus den Unteransprüchen, aus den Zeichnungen und aus der zugehörigen Figurenbeschreibung anhand der Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

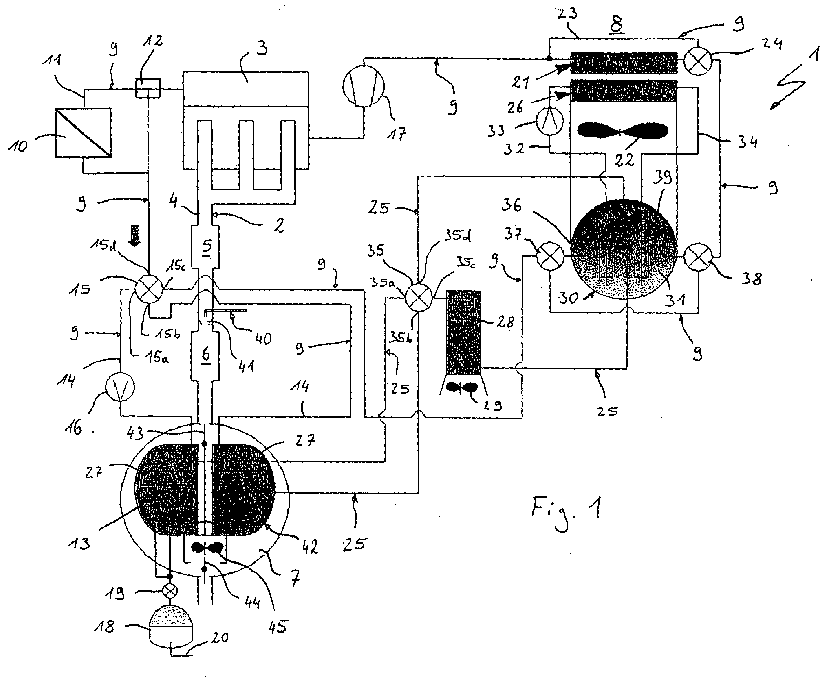

Die einzige Fig. 1 zeigt eine schaltplanartige Prinzipdarstellung einer erfindungsgemäßen Einrichtung.

Entsprechend Fig. 1 umfaßt eine Einrichtung 1 nach der Erfindung eine Abgasanlage 2 einer Verbrennungsmaschine 3 mit einem Abgasstrang 4, der Abgase, welche die Verbrennungsmaschine 3 erzeugt, abtransportiert. Im Abgasstrang 4 können beispielsweise ein Katalysator 5 und ein Partikelfilter 6 angeordnet sein. Des weiteren ist im Abgasstrang 4 ein Endschalldämpfer 7 angeordnet.

Die erfindungsgemäße Einrichtung 1 zum Kühlen und/oder Heizen eines mit 8 bezeichneten, im übrigen jedoch nicht dargestellten Raumes, insbesondere eines Fahrgastraums eines mit der Verbrennungsmaschine 3 ausgestatteten Kraftfahrzeugs, ist außerdem mit einem Motorkühlkreis 9 ausgestattet, der einerseits zum Kühlen der Verbrennungsmaschine 3 und andererseits zum Zuheizen der Verbrennungsmaschine 3 sowie zum Heizen des Raums 8 dient. Um die Verbrennungsmaschine 3 kühlen oder Zuheizen zu können, ist der Motorkühlkreis 9 durch die Verbrennungsmaschine 3 geführt.

Zum Kühlen kann der Motorkühlkreis 9 regelmäßig mit einem Kühler 10 ausgestattet sein, der einerseits vom flüssigen Wärmeübertragungsmedium des Motorkühlkreises 9 durchströmt wird und andererseits mit einer Luftströmung beaufschlagbar ist. Um diesen Kühler 10, insbesondere zum Warmlaufen der Verbrennungsmaschine 3 umgehen zu können, ist dieser Kühler 10 in einer Kühlerschleife 11 des Motorkühlkreises 9 angeordnet, die mit Hilfe eines Thermostatventils 12 aktivierbar und deaktivierbar ist.

Für die Zuheizfunktion ist der Motorkühlkreis 9 mit einem Abgaswärmetauscher 13 ausgestattet, der im Abgasstrang 4, vorzugsweise im Endschalldämpfer 7 angeordnet ist. Dieser Abgaswärmetauscher 13 ist hierbei in einer Zuheizschleife 14 des Motorkühlkreises 9 angeordnet, die mit Hilfe einer Ventileinrichtung 15, die z.B. als 4/2-Wegeventil ausgebildet ist, aktivierbar und deaktivierbar ist.

Die Ventileinrichtung 15 weist vier Anschlüsse auf, nämlich die Anschlüsse 15a, 15b, 15c und 15d. In einer ersten Schaltstellung der Ventileinrichtung 15 ist der Anschluß 15d mit dem Anschluß 15a verbunden, während der Anschluß 15b mit dem Anschluß 15c verbunden ist. Dementsprechend ist bei dieser ersten Schaltstellung die Zuheizschleife 14 in den Motorkühlkreis 9 eingeschleift, also aktiviert und wird dementsprechend vom Wärmeübertragungsmedium durchströmt. In einer zweiten Schaltstellung ist der Anschluß 15d mit dem Anschluß 15c verbunden, so daß die Zuheizschleife 14 vom übrigen Motorkühlkreis 9 getrennt ist. Dementsprechend ist die Zuheizschleife 14 in dieser zweiten Schaltstellung der Ventileinrichtung 15 deaktiviert.

Die Zuheizschleife 14 ist hier mit einer eigenen Pumpe 16 ausgestattet, die unabhängig von einer Hauptpumpe 17 des Motorkühlkreises 9 betätigbar sein kann.

Für die Zuheizschleife 14 kann außerdem ein Ausgleichsbehälter 18 vorgesehen sein, der über ein Ventil 19 mit der Zuheizschleife 14 verbindbar ist. Wenn die Zuheizschleife 14 deaktiviert ist, kann es sinnvoll sein, das darin enthaltene Wärmeübertragungsmedium in den Ausgleichsbehälter 18 zu überführen. Zweckmäßig ermöglicht die oben beschriebene zweite Schaltstellung der Ventileinrichtung 15 hierzu eine Entlüftung der beiden Anschlüsse 15a und 15b, wobei gleichzeitig das Ventil 19 den Ausgleichsbehälter 18 mit der Zuheizschleife 14 verbindet. Um das im Ausgleichsbehälter 18 gespeicherte Wärmeübertragungsmedium wieder in die Zuheizschleife 14 zurückführen zu können, kann der Ausgleichsbehälter 18 mit einem Druckluftanschluß 20 an eine entsprechende Druckluftversorgung angeschlossen sein. Der Ausgleichsbehälter 18 ist hierbei nach Art eines hydropneumatischen Druckspeichers aufgebaut. Bei geöffnetem Ventil 19 wird bei einer entsprechenden Druckbeaufschlagung über dem Druckluftanschluß 20 das Wärmeübertragungsmedium wieder in die Zuheizschleife 14 zurücktransportiert.

Damit der Motorkühlkreis 9 seine Heizfunktion für den Raum 8 wahrnehmen kann, weist der Motorkühlkreis 9 einen Heizungswärmetauscher 21 auf, der dem Raum 8 ausgesetzt ist bzw. mit einer Luftströmung beaufschlagbar ist, die z.B. mit Hilfe eines Gebläses 22 generiert werden kann und die in den Raum 8 eintritt. Zur Umgehung dieses Heizungswärmetauschers 21 besitzt der Motorkühlkreis 9 einen Bypass 23, der mit einem entsprechenden Bypassventil 24 aktivierbar und deaktivierbar ist.

Erfindungsgemäß ist die Kühl- und/oder Heizeinrichtung 1 außerdem mit einem Adorberkühlkreis 25 ausgestattet, mit dessen Hilfe der Raum 8 gekühlt werden kann. Zu diesem Zweck umfaßt der Adsorberkühlkreis 25 einen Kühlungswärmetauscher 26, der in geeigneter Weise dem Raum 8 ausgesetzt ist. Zweckmäßig sind der Kühlungswärmetauscher 26 und der Heizungswärmetauscher 21 so angeordnet, daß sie von demselben Luftstrom, also mit dem gleichen Gebläse 22 beaufschlagbar sind.

Des weiteren umfaßt der Adsorberkühlkreis 25 hier zwei Sorber 27, die beide im Abgasstrang 4, zweckmäßig im Endschalldämpfer 7 angeordnet sind. Diese Sorber 27 enthalten ein geeignetes Sorbens, insbesondere aus Zeolith. Des weiteren enthält der Adosorberkühlkreis 25 einen Kondensator 28, dem ein Kondensatorgebläse 29 zugeordnet sein kann, sowie einen Verdampfer 30. Entsprechend der hier gezeigten bevorzugten Ausführungsform ist der Verdampfer 30 als Speicher, insbesondere als Kältespeicher 31 ausgebildet. Hierbei ist der Kühlungswärmetauscher 26 über einen Vorlauf 32, in dem eine Hilfspumpe 33 angeordnet sein kann, und einen Rücklauf 34 an den Kältespeicher 31 angeschlossen. Zweckmäßig bilden der Kältespeicher 31 und der Kühlungswärmetauscher 26 jedoch eine bauliche Einheit. Insbesondere kann der Kältespeicher 31 bereits als Wärmetauscher ausgebildet sein und dadurch den Kühlungswärmetauscher 26 bilden.

Der Adsorptionskühlkreis 25 weist ebenfalls eine Ventileinrichtung 35 auf, die zweckmäßig als 4/2-Wegeventil mit vier Anschlüssen 35a, 35b, 35c und 35d ausgebildet ist. In einer ersten Schaltstellung sind der Anschluß 35a mit dem Anschluß 35d und der Anschluß 35b mit dem Anschluß 35c verbunden, so daß der in Fig. 1 links dargestellte Sorber 27 direkt mit dem Verdampfer 30 bzw. mit dem Kältespeicher 31 verbunden ist, während der rechte Sorber 27 über den Kondensator 28 mit dem Verdampfer 30 bzw. mit dem Kältespeicher 31 verbunden ist. In einer zweiten Schaltstellung sind dann der Anschluß 35a mit dem Anschluß 35c und der Anschluß 35b mit dem Anschluß 35d verbunden, so daß dementsprechend der rechte Sorber 27 direkt mit dem Kältespeicher 31 verbunden ist, während der linke Sorber 27 über den Kondensator 28 mit dem Verdampfer 30 verbunden ist.

Entsprechend der hier gezeigten bevorzugten Ausführungsform ist der Motorkühlkreis 9 mit einer Speicherschleife 36 ausgestattet, die mit Hilfe geeigneter Ventile 37 und 38 aktivierbar und deaktivierbar ist. Diese Speicherschleife 36 durchdringt den Speicher 31 und steht mit dem darin enthaltenen Wärmeübertragungsmedium wärmeübertragend in Kontakt. Durch diese Bauweise ist es möglich, den Speicher auch als Wärmespeicher 39 zu benutzen, sofern er nicht als Kältespeicher 31 benötigt wird. Wenn der Motorkühlkreis 9 und der Adsorberkühlkreis 25 ohnehin über den gemeinsamen Speicher (Kältespeicher 31 bzw. Wärmespeicher 39) miteinander gekoppelt sind, kann es sinnvoll sein, nur einen dem Raum 8 ausgesetzten Wärmetauscher vorzusehen, der je nach Betriebszustand als Kühlungswärmetauscher 26 oder als Heizungswärmetauscher 21 dient. Dieser Wärmetauscher kann beispielsweise wie der Kühlungswärmetauscher 26 in Fig. 2 über einen Vorlauf 32 und einen Rücklauf 34 mit dem Speicher 31 bzw. 39 verbunden sein, wobei dann Vorlauf 32 und Rücklauf 34 einen Sekundärkreis bilden, in dem der Wärmetauscher 26 angeordnet ist.

Von besonderer Bedeutung ist hierbei, daß der Motorkühlkreis 9 einerseits und der Adsorberkühlkreis 25 andererseits jeweils als geschlossene Kühlkreise ausgebildet sind, deren Wärmeübertragungsmedien an keiner Stelle direkt miteinander in Kontakt stehen oder sich sogar durchmischen können. Die Funktionssicherheit der gesamten Einrichtung 1 wird dadurch erhöht. Des weiteren ist es dadurch möglich, den Adsorptionskühlkreis 25 auf einem gegenüber dem Motorkühlkreis 9 reduzierten Druckniveau, insbesondere etwa bei Vakuum, zu betreiben, wodurch sich dessen Leistung und Wirkungsgrad verbessern läßt. Zweckmäßig wird als Wärmetransportmedium in beiden Kanälen 9, 25 eine auf Wasser basierende Flüssigkeit verwendet.

Die hier gezeigte Ausführungsform zeichnet sich außerdem durch eine Zuheizeinrichtung 40 aus, die hier in Form eines mit einem Brennstoff betriebenen Brenners 41 ausgebildet ist. Dieser Brenner 41 ist dabei stromauf des Abgaswärmetauschers 13 sowie stromauf der Sorber 27 im Abgasstrang 4 angeordnet. Der Brenner 41 kann unabhängig von der Verbrennungsmaschine 3 betrieben werden, so daß unabhängig vom Betriebszustand der Verbrennungsmaschine 3 mit Hilfe des Brenners 41 heiße Abgas erzeugt und über den Abgasstrang 4 dem Abgaswärmetauscher 13 und den Sorbern 27 zugeführt werden kann. Mit Hilfe dieser Zuheizeinrichtung 40 kann somit unter anderem ein Standbetrieb für den Motorkühlkreis 9 sowie für den Adsorberkühlkreis 25 realisiert werden. Beispielsweise kann dadurch der Raum 8 bei stillstehender Verbrennungsmaschine 3 beheizt oder gekühlt werden. Zusätzlich kann außerdem die Verbrennungsmaschine 3 vorgewärmt werden. Es ist klar, daß mit Hilfe der Zuheizeinrichtung .40 die vorbeschriebenen Heizungs-, Kühlungs- und Vorwärm- oder Zuheiz-Aufgaben auch dann bewirkt oder unterstützt werden können, wenn die Verbrennungsmaschine 3 in Betrieb ist, jedoch nicht hinreichend Abwärme für die Wahrnehmung der genannten Aufgaben erzeugt.

Darüber hinaus kann der Brenner 41 auch bedarfsabhängig dazu verwendet werden, das Partikelfilter 6 zu regenerieren, wodurch der Brenner 41 eine weitere wichtige Funktion erhält.

Wie in Fig. 1 symbolisch dargestellt, sind bei der bevorzugten Ausführungsform der Abgaswärmetauscher 13 des Motorkühlkreises 9 und die beiden Sorber 27 des Adsorptionskühlkreises 25 zu einer Wärmetauscher-Sorber-Einheit 42 zusammengefaßt, die im Abgasstrang 4, hier im Endschalldämpfer 7 angeordnet ist. Diese Wärmetauscher-Sorber-Einheit 42 bildet eine kompakte Baugruppe, die besonders einfach handhabbar und montierbar ist. Wichtig ist hierbei, daß diese Einheit 42 für die Zuheizschleife 14 des Motorkühlkreises 9, für den Adsorberkühlkreis 25 und für die Abgase des Abgasstrangs 4 separate Strömungswege enthält, derart, daß die verschiedenen Medien zwar wärmeübertragend, nicht jedoch direkt miteinander in Kontakt kommen.

In der hier gezeigten Ausführungsform ist die Wärmetauscher-Sorber-Einheit 42 zweiflutig ausgebildet, wobei jede Flut oder Hälfte jeweils einen der Sorber 27 enthält. Mit Hilfe von Abgasleitklappen 43, 44 kann die Abgasströmung bedarfsabhängig so geleitet werden, daß entweder nur die eine, gemäß Fig. 1 linke Hälfte oder nur die andere, gemäß Fig. 1 rechte Hälfte oder beide Hälften gleichzeitig vom Abgas durchströmt werden. Hierdurch kann einerseits die Heizleistung des Wärmetauschers 13 in zwei Leistungsstufengeschaltet werden (halbe Leistung oder volle Leistung). Andererseits ist es dadurch auch möglich, die beiden Sorber 27 abwechselnd mit dem Abgas zu beaufschlagen. Mit der Folge, daß die beiden Sorber 27 phasenverschoben zueinander zum Adsorbieren und zum Desorbieren betrieben werden können. Zur Verbesserung des Adsorptionsverhaltens kann außerdem ein Gebläse 45 vorgesehen sein, mit dem die beiden Sorber 27 wechselweise mit einer Kühlströmung beaufschlagbar sind.

Die Funktionsweise der erfindungsgemäßen Einrichtung 1 wird im folgenden anhand von fünf Szenarien näher erläutert, wobei davon ausgegangen wird, daß die erfindungsgemäße Einrichtung 1 in einem Kraftfahrzeug realisiert ist. Ebenso ist es möglich, die Einrichtung 1 nach der Erfindung z.B. in einem Gebäude zu realisieren, wobei die Verbrennungsmaschine 3 nicht zwangsläufig ein Motor zur Erzeugung mechanischer Antriebs- oder Vortriebsleistung sein muß, sondern auch eine beliebige andere Verbrennungsmaschine oder Verbrennungsanlage sein kann, die bei der Verbrennung eines Brennstoffs Abgase erzeugt.

Beim ersten Szenario herrschen folgende Randbedingungen: Das Fahrzeug steht mit kaltem Motor 3 und kalter Fahrzeugkabine 8 bei niedrigen Außentemperaturen. Der Motor 3 und der Innenraum 8 sollen aufgeheizt werden ohne den Motor 3 zu starten.

Dementsprechend wird der Brenner 41 der Zuheizeinrichtung 40 aktiviert, um heiße Verbrennungsabgase zu erzeugen. Die Ventileinrichtung 15 im Motorkühlkreis 9 wird zur Aktivierung der Zuheizschleife 14 geschaltet; gegebenenfalls muß noch die Zuheizschleife 14 mit Wärmetransportmedium gefüllt werden. Die Pumpe 16 wird in Betrieb genommen, um das Wärmeübertragungsmedium umzuwälzen. Über den Abgaswärmetauscher 13 kann den Abgasen Wärme entzogen werden, wodurch es möglich ist, über den Heizungswärmetauscher 21 den Fahrzeuginnenraum 8 zu beheizen. Unterstützt wird dies durch die Betätigung des Gebläses 22. Gleichzeitig wird durch die Durchströmung des Motors 3 dieser vorgewärmt. Je nach Temperatur im Speicher 39 wird dieser durch eine entsprechende Betätigung der Ventile 37, 38 aufgeladen oder umgangen. Es ist klar, daß vor der Betätigung des Brenners 41 bzw. zu Beginn des Heizvorgangs eine ggf. im Wärmespeicher 39 gespeicherte Wärmemenge zum Heizen verwendet wird.

Bei einem zweiten Szenario gelten folgende Randbedingungen: Sehr kalte Außentemperaturen, das Fahrzeug fährt. Die Innenraumtemperatur soll durch Heizen konstant gehalten werden. Je nachdem, wie viel Wärmeenergie die Verbrennungsmaschine 3 bei ihrer Kühlung an den Motorkühlkreis 9 übertragen kann, muß mehr oder weniger zusätzliche Wärmeenergie über den Abgaswärmetauscher 13 dem Abgas der Verbrennungsmaschine 3 entzogen werden. Darüber hinaus kann es erforderlich sein, zusätzlich den Brenner 41 zu betätigen. Im Unterschied zum vorhergehenden Szenario kann hier die Hauptpumpe 17 die Förderung des Wärmeübertragungsmediums im Motorkühlkreis 9 übernehmen, so daß die Pumpe 16 der Zuheizschleife 14 deaktiviert werden kann.

In einem dritten Szenario herrschen mittlere Außentemperaturen und der Fahrzeuginnenraum 8 soll beheizt werden. Bei diesen Umgebungsbedingungen kann die Verbrennungsmaschine 3 hinreichend Wärmeenergie an den Motorkühlkreis 9 übertragen, so daß die Zuheizschleife 14 deaktiviert werden kann. Dabei kann außerdem das Wärmeübertragungsmedium der Zuheizschleife 14 in den Ausgleichsbehälter 18 abgelassen werden. Je nach Wärmebedarf für die Innenraumheizung kann der Wärmespeicher 39 aufgeladen bzw. zur Unterstützung der Heizung herangezogen werden.

In einem vierten Szenario sollen heiße Außentemperaturen herrschen, das Fahrzeug steht, der Kältespeicher 31 ist geladen und der Fahrzeuginnenraum 8 soll gekühlt werden. Zur Realisierung der gewünschten Standkühlung werden die Pumpe 33 und das Gebläse 22 aktiviert, wodurch die im Kältespeicher 31 gespeicherte Kälte diesem entzogen und über den Kühlungswärmetauscher 26 dem Innenraum 8 zugeführt wird. Zweckmäßig ist der Kältespeicher 31 so dimensioniert, daß er bei einer üblichen Standzeit des Fahrzeugs eine hinreichende Abkühlung des Fahrzeuginnenraums 8 gewährleistet, bevor das darin enthaltene Wärmeübertragungsmedium soweit erwärmt ist, daß eine weitere Abkühlung des Raums 8 nicht mehr möglich ist.

Für ein fünftes Szenario sollen hohe Außentemperaturen herrschen und bei fahrendem Fahrzeug der Fahrzeuginnenraum 8 gekühlt werden. Hierzu werden die beiden Sorber 27 phasenverschoben zum Adsorbieren und Desorbieren betätigt. Beispielsweise befindet sich der linke Sorber 27 im Adsorbierbetrieb und kann dadurch sehr schnell große Mengen an Wärmeübertragungsfluid aus dem Verdampfer 30 ansaugen, wodurch sich der Kältespeicher 31 abkühlt. Zu diesem Zweck ist der linke Sorber 27 über die Ventileinrichtung 35 direkt mit dem Verdampfer 30 verbunden. Simultan kann dabei der rechte Sorber 27 im Desorbierbetrieb gefahren werden, wozu er durch eine entsprechende Betätigung der Klappen 43, 44 mit heißen Abgasen beaufschlagt wird. Hierdurch wird der rechte Sorber 27 erwärmt, um das darin gespeicherte flüssige Wärmeübertragungsmedium, z.B. durch Verdampfen, auszutreiben. Das (gasförmige) Wärmeübertragungsmedium wird über den Kondensator 28 geleitet, dabei abgekühlt, ggf. verflüssigt und dem Verdampfer 30 zugeführt.

Nach dem Desorbieren ist es sinnvoll, die Temperatur des jeweiligen Sorbers 27 vor dem nächsten Adsorptionsbetrieb wieder abzusenken, um dadurch eine möglichst hohe Kühlleistung zu erzielen. Die Kühlung des desorbierten Sorbers 27 kann mit Hilfe des Gebläses 45 erreicht werden. In einer nachfolgenden Betriebsphase wird nun der frisch desorbierte rechte Sorber 27 gekühlt, während - durch eine entsprechende Stellung der Klappen 43, 44 - der frisch absorbierte linke Sorber 27 mit Abgas beaufschlagt wird, um dort die Desorbierung durchzuführen. Mit dieser Umschaltung zwischen den beiden Sorber 27 wird gleichzeitig die Ventileinrichtung 35 des Adsorptionskreises 25 entsprechend betätigt. Durch eine entsprechende Auslegung der Sorber 27 sowie durch eine geeignete Abstimmung der einzelnen Betriebsphasen, kann durch eine phasenverschobene, zyklische Betätigung der beiden Sorber 27 eine permanente Kühlung des Kältespeichers 31 gewährleistet werden.

Für den Fall, daß die von der Verbrennungsmaschine 3 im Abgas bereitgestellte Wärmeenergie nicht zum Desorbieren der Sorber 27 ausreicht, kann bedarfsabhängig der Brenner 41 in entsprechender Weise betätigt werden, um zusätzlich heiße Abgase zu erzeugen.

Im Betrieb des Adsorptionskühlkreises 25 ist es zweckmäßig, die Zuheizschleife 14 - sofern ein Zuheizen nicht erforderlich ist - zu deaktivieren und deren Wärmeübertragungsmedium in den Ausgleichsbehälter 18 abzulassen, um dadurch die Trägheit der Wärmetauscher-Sorber-Einheit 42 beim wechselseitigen Adsorbieren, Desorbieren und Kühlen zu_ reduzieren, wodurch sich die Leistungsfähigkeit des Adsorptionskühlkreises 25 erhöht.

### Bezugszeichenliste

- 1: Einrichtung
- 2: Abgasanlage
- 3: Verbrennungsmaschine
- 4: Abgasstrang
- 5: Katalysator
- 6: Partikelfilter
- 7: Endschalldämpfer
- 8: Raum
- 9: Motorkühlkreis
- 10: Kühler
- 11: Kühlerschleife
- 12: Thermostat
- 13: Abgaswärmetauscher
- 14: Zuheizschleife
- 15: Ventileinrichtung
- 15a - 15d: Anschluß von 15
- 16: Pumpe von 14
- 17: Hauptpumpe von 9
- 18: Ausgleichsbehälter von 14
- 19: Ventil
- 20: Druckluftanschluß
- 21: Heizungswärmetauscher von 9
- 22: Gebläse

## Patentansprüche

1. Einrichtung zum Kühlen und/oder Heizen eines Raums (8), insbesondere eines Fahrgastraums eines Kraftfahrzeugs,
- mit einer Abgasanlage (2) für eine Verbrennungsmaschine (3), die einen Abgasstrang (4) aufweist, der von der Verbrennungsmaschine (3) erzeugte Abgase abführt,
- mit einem geschlossenen Motorkühlkreis (9) zum Heizen des Raums (8) und zum Kühlen und Zuheizen der Verbrennungsmaschine (3), der einen im Abgasstrang (4) angeordneten Abgaswärmetäuscher (13) und einen dem Raum (8) ausgesetzten Heizungswärmetauscher (21) aufweist,
- mit einem geschlossenen Adsorptionskühlkreis (25) zum Kühlen des Raums (8), der mindestens einen im Abgasstrang (4) angeordneten, als Desorber betreibbaren Sorber (27), einen dem Raum (8) ausgesetzten Kühlungswärmetauscher (26), einen Kondensator (28) und einen Verdampfer (30) aufweist,
**dadurch gekennzeichnet,**
**dass** der Sorber (27) auch als Absorber betreibbar ist.

2. Einrichtung nach Anspruch 1,
**dadurch gekennzeichnet,**
**daß** der Verdampfer (20) als Kältespeicher (31) ausgebildet ist.

3. Einrichtung nach Anspruch 2,
**dadurch gekennzeichnet,**
**daß** der Motorkühlkreis (9) wärmeübertragend mit dem Kältespeicher (31) verbunden ist.

4. Einrichtung nach Anspruch 2 oder 3,
**dadurch gekennzeichnet,**
**daß** der Kühlungswärmetauscher (26) an den Kältespeicher (31) angeschlossen ist.

5. Einrichtung nach Anspruch 2 oder 3,
**dadurch gekennzeichnet,**
**daß** der Kältespeicher (31) als Wärmetauscher ausgebildet ist und als Kühlungswärmetauscher (26) dient.

6. Einrichtung nach einem der Ansprüche 2 bis 4,
**dadurch gekennzeichnet,**
**daß** der Kältespeicher (31) wärmeübertragend mit einem Sekundärkreis (32, 34) gekoppelt ist, der einen dem Raum (8) ausgesetzten Wärmetauscher enthält, der als Kühlungswärmetauscher (26) und/oder als Heizungswärmetauscher (21) dient.

7. Einrichtung nach einem der Ansprüche 1 bis 6,
**dadurch gekennzeichnet,**
**daß** der Abgaswärmetauscher (13) des Motorkühlkreises (9) und der wenigstens eine Sorber 27 des Adsorptionskühlkreises (25) zu einer Wärmetauscher-Sorber-Einheit (42) zusammengefaßt sind.

8. Einrichtung nach Anspruch 7,
**dadurch gekennzeichnet,**
**daß** die Wärmetauscher-Sorber-Einheit (42) zwei- oder mehrflutig ausgebildet ist, wobei jede Flut einen Sorber (27) enthält, wobei die Wärmetauscher-Sorber-Einheit (42) so ausgebildet oder aufgebaut ist, daß die Sorber (27) zueinander phasenverschoben zum Adsorbieren und Desorbieren nutzbar sind.

9. Einrichtung nach Anspruch 8,
**dadurch gekennzeichnet,**
**daß** die Wärmetauscher-Sorber-Einheit (42) ein Gebläse (45) aufweist, mit dem die Sorber (27) wechselweise vor dem Adsorbieren mit einer Kühlströmung beaufschlagbar sind.

10. Einrichtung nach einem der Ansprüche 1 bis 9,
**dadurch gekennzeichnet,**
**daß** der Motorkühlkreis (9) eine Zuheizeinrichtung (40) aufweist.

11. Einrichtung nach Anspruch 10,
**dadurch gekennzeichnet,**
**daß** die Zuheizeinrichtung (40) einen Brenner (41) aufweist, der stromauf des Abgaswärmetauschers (13) und des wenigstens einen Sorbers (27) oder stromauf der Wärmetauscher-Sorber-Einheit (42) im Abgasstrang (4) angeordnet ist.

12. Einrichtung nach einem der Ansprüche 1 bis 11,
**dadurch gekennzeichnet,**
**daß** der Abgaswärmetauscher (13) und/oder der wenigstens eine Sorber (27) oder die Wärmetauscher-Sorber-Einheit (42) in einen Endschalldämpfer (7) des Abgasstrangs (4) integriert ist/sind.

13. Einrichtung nach einem der Ansprüche 1 bis 12,
**dadurch gekennzeichnet,**
**daß** beide Kühlkreise (9, 25) eine auf Nasser basierende Flüssigkeit als Wärmetransportmedium oder Wärmeübertragungsmedium enthalten.

14. Einrichtung nach einem der Ansprüche 1 bis 13,
**dadurch gekennzeichnet,**
**daß** eine den Abgaswärmetauscher (13) enthaltende Zuheizschleife (14) des Motorkühlkreises (9) mit einer Ventileinrichtung (15) aktivierbar und deaktivierbar ist, wobei die Zuheizschleife (14) mit einem Ausgleichsbehälter (18) verbindbar ist, in den das flüssige Wärmeübertragungsmedium der deaktivierten Zuheizschleife (14) überführbar ist.

## Claims

1. Device for cooling and/or heating a space (8), in particular a passenger compartment of a motor vehicle,
- having an exhaust system (2) for an internal combustion engine (3), which includes an exhaust train (4) that discharges exhaust gases generated by the internal combustion engine (3),
- having a closed engine cooling circuit (9) for heating the space (8) and for cooling and heating up the internal combustion engine (3), which engine cooling circuit includes an exhaust-gas heat exchanger (13) arranged in the exhaust train (4) and a heating heat exchanger (21) exposed to the space (8),
- having a closed adsorption cooling circuit (25) for cooling the space (8), which at least includes a sorber (27), which is arranged in the exhaust train (4) and can be operated as a desorber, a cooling heat exchanger (26), which is exposed to the space (8), a condenser (28) and an evaporator (30),
**characterized in that** the sorber (27) can also be operated as an adsorber.

2. Device according to Claim 1, **characterized in that** the evaporator (20) is designed as a refrigeration accumulator (31).

3. Device according to Claim 2, **characterized in that** the engine cooling circuit (9) is connected in a heat-exchanging manner to the refrigeration accumulator (31).

4. Device according to Claim 2 or 3, **characterized in that** the cooling heat exchanger (26) is connected to the refrigeration accumulator (31).

5. Device according to Claim 2 or 3, **characterized in that** the refrigeration accumulator (31) is designed as a heat exchanger and acts as a cooling heat exchanger (26).

6. Device according to one of Claims 2 to 4, **characterized in that** the refrigeration accumulator (31) is coupled in a heat-exchanging manner to a secondary circuit (32, 34), which includes a heat exchanger which is exposed to the space (8) and acts as a cooling heat exchanger (26) and/or as a heating heat exchanger (21).

7. Device according to one of Claims 1 to 6, **characterized in that** the exhaust-gas heat exchanger (13) of the engine cooling circuit (9) and the at least one sorber (27) of the adsorption cooling circuit (25) are combined to form a heat exchanger/sorber unit (42).

8. Device according to Claim 7, **characterized in that** the heat exchanger/sorber unit (42) is of two-flow or multi-flow design, with each flow including a sorber (27), the heat exchanger/sorber unit (42) being designed or constructed in such a way that the sorbers (27) can be used for adsorption and desorption in phase-shifted fashion with respect to one another.

9. Device according to Claim 8, **characterized in that** the heat exchanger/sorber unit (42) has a fan (45), by which a cooling flow can be applied to the sorbers (27) alternately prior to the adsorption.

10. Device according to one of Claims 1 to 9, **characterized in that** the engine cooling circuit (9) includes a heat-up device (40).

11. Device according to Claim 10, **characterized in that** the heat-up device (40) has a burner (41) which is arranged in the exhaust train (4) upstream of the exhaust-gas heat exchanger (13) and the at least one sorber (27) or upstream of the heat exchanger/sorber unit (42).

12. Device according to one of Claims 1 to 11, **characterized in that** the exhaust-gas heat exchanger (13) and/or the at least one sorber (27) or the heat exchanger/sorber unit (42) is/are integrated in an end silencer (7) of the exhaust train (4).

13. Device according to one of Claims 1 to 12, **characterized in that** both cooling circuits (9, 25) contain a water-based liquid as heat-transfer medium or heat-exchange medium.

14. Device according to one of Claims 1 to 13, **characterized in that** a heat-up loop (14), which includes the exhaust-gas heat exchanger (13), of the engine cooling circuit (9) can be activated and deactivated using a valve device (15), it being possible for the heat-up loop (14) to be connected to a compensation vessel (18) into which the liquid heat-exchange medium of the deactivated heat-up loop (14) can be passed.

## Revendications

1. Système de refroidissement et/ou de chauffage d'un espace (8), en particulier d'un habitacle d'un véhicule automobile,
- avec un système d'échappement (2) pour une machine thermique (3), qui présente une ligne d'échappement (4) qui évacue les gaz d'échappement produits par la machine thermique (3),
- avec un circuit fermé (9) de refroidissement du moteur pour le chauffage de l'espace (8) et pour le refroidissement et le préchauffage de la machine thermique (3), qui présente un échangeur de chaleur (13) de gaz d'échappement disposé dans la ligne d'échappement (4) et un échangeur de chaleur (21) de chauffage exposé à l'espace (8),
- avec un circuit fermé (25) de refroidissement par adsorption pour refroidir l'espace (8), qui présente au moins un sorbeur (27) pouvant être exploité en désorbeur et disposé dans la ligne d'échappement (4), un échangeur de chaleur (26) de refroidissement exposé à l'espace (8), un condenseur (28) et un évaporateur (30),
**caractérisé en ce que** le sorbeur (27) peut être également exploité en adsorbeur.

2. Système selon la revendication 1, **caractérisé en ce que** l'évaporateur (30) est conçu comme accumulateur de froid (31).

3. Système selon la revendication 2, **caractérisé en ce que** le circuit (9) de refroidissement du moteur est relié en transmission de chaleur à l'accumulateur de froid (31).

4. Système selon la revendication 2 ou 3, **caractérisé en ce que** l'échangeur de chaleur (26) de refroidissement est raccordé à l'accumulateur de froid (31).

5. Système selon la revendication 2 ou 3, **caractérisé en ce que** l'accumulateur de froid (31) est conçu comme échangeur de chaleur et sert d'échangeur de chaleur (26) de refroidissement.

6. Système selon l'une quelconque des revendications 2 à 4, **caractérisé en ce que** l'accumulateur de froid (31) est couplé en transmission de chaleur à un circuit secondaire (32, 34) qui contient un échangeur de chaleur exposé à l'espace (8) qui sert d'échangeur de chaleur (26) de refroidissement et/ou d'échangeur de chaleur (21) de chauffage.

7. Système selon l'une quelconque des revendications 1 à 6, **caractérisé en ce que** l'échangeur de chaleur (13) de gaz d'échappement du circuit (9) de refroidissement du moteur et le sorbeur (27) au moins unique du circuit (25) de refroidissement par adsorption sont réunis en une unité (42) formant un échangeur de chaleur et sorbeur.

8. Système selon la revendication 7, **caractérisé en ce que** l'unité (42) formant un échangeur de chaleur et sorbeur est conçue à deux flux ou davantage, chaque flux contenant un sorbeur (27), sachant que l'unité (42) formant un échangeur de chaleur et sorbeur est conçue ou structurée de telle sorte que les sorbeurs (27) peuvent être utilisés de façon mutuellement déphasée pour l'adsorption et la désorption.

9. Système selon la revendication 8, **caractérisé en ce que** l'unité (42) formant un échangeur de chaleur et sorbeur présente une soufflante (45) par laquelle les sorbeurs (27) peuvent être alternativement sollicités, avant l'adsorption, par un courant de refroidissement.

10. Système selon l'une quelconque des revendications 1 à 9, **caractérisé en ce que** le circuit (9) de refroidissement du moteur présente un dispositif (40) de chauffage auxiliaire.

11. Système selon la revendication 10, **caractérisé en ce que** le dispositif (40) de chauffage auxiliaire présente un brûleur (41) qui est disposé dans la ligne d'échappement (4) en amont de l'échangeur de chaleur (13) de gaz d'échappement et du sorbeur (27) au moins unique, ou en amont de l'unité (42) formant un échangeur de chaleur et sorbeur.

12. Système selon l'une quelconque des revendications 1 à 11, **caractérisé en ce que** l'échangeur de chaleur (13) de gaz d'échappement et/ou le sorbeur (27) au moins unique, ou l'unité (42) formant un échangeur de chaleur et sorbeur, est/sont intégré(s) dans un silencieux terminal (7) de la ligne d'échappement (4).

13. Système selon l'une quelconque des revendications 1 à 12, **caractérisé en ce que** les deux circuits de refroidissement (9, 25) contiennent un liquide à base d'eau comme agent de transport ou de transmission de chaleur.

14. Système selon l'une quelconque des revendications 1 à 13, **caractérisé en ce qu'**une boucle (14) de chauffage auxiliaire contenant l'échangeur de chaleur (13) de gaz d'échappement du circuit (9) de refroidissement du moteur peut être activée et désactivée par un ensemble de soupape (15), la boucle (14) de chauffage auxiliaire pouvant être reliée à un réservoir de compensation (18) dans lequel peut être transféré l'agent liquide de transmission de chaleur de la boucle (14) de chauffage auxiliaire désactivée.
